# EUROPEAN PATENT APPLICATION

(11) **EP 4 163 084 A1**
(43) Date of publication of application: **12.04.2023**
(21) Application number: 21818249.1
(22) Date of filing: 07.06.2021
(51) Int. Cl.: B29C 64/321, B29C 64/314, B29C 64/329, B29C 64/209, B29C 64/165, B33Y 40/00

(54) **EXTRUDER, GRANULE FEED, AND LIQUID ADDITIVE DISPENSER SYSTEM FOR 3D PRINTERS**

(30) Priority: 05.06.2020 ES 202030534
(71) Applicant: Casas Alvarez, Juan, 08024 Barcelona (ES)
(72) Inventor: Casas Alvarez, Juan, 08024 Barcelona (ES)
(74) Representative: Alier Benages, Elisabet
(86) International application number: PCT/ES2021/070414
(87) International publication number: WO 2021/245319

(57) **Abstract**

An extruder, granule feed, and liquid additive dispenser system for 3D printers, comprising a mobile print head (1) with a substantially vertical extruder barrel (17) and a throat (18) which, at the upper area whereof, comprises a mobile funnel-shaped hopper (10') for the receiving of the granules (2) and a rotating internal worm (19). The mobile hopper (10') presents curved indentations (28) that progress inward in the rotational direction of the worm, seeking langency to the mouth (29). The worm (19) comprises, as an extension to its thread (26), a drag shovel (20) complementary to the mobile hopper (10') with a sloping internal thrust face (27) that links with its cavity (25) and draws inward the granules contained in the hopper (10') via said indentations.

## Description

### TECHNICAL FIELD

The present invention relates to an extruder and, for example, plastic or cement granule feed, and liquid additive dispenser system for 3D printers. The system ensures constant and homogeneous flows of extruded material as a result of the design of its components and the efficiency of the system in the constant supply of granule and the precise injection of liquid additive directly into the barrel.

### STATE OF THE ART

The 3D printing process by means of molten plastic deposition commonly uses coils of plastic filament or granules that are melted in an extruder just before being deposited layer after layer to form a three-dimensional object. It is also possible to perform extrusion from cement granules that are hydrated before deposition.

The use of filament extruders offers precision in the extrusion of the resulting plastic due to the constant calibrated diameter of the supply, whereas the use of granule extruders usually shows less homogeneity in the extrusion flow due to the variable size of the granules and the amount introduced in the barrel.

With granule extruders for 3D printers, single granule reservoirs in the same extrusion head are commonly used due to the drawback of transporting the material from a larger secondary reservoir, this leads to an increase in the mass to be displaced.

With conventional extrusion worms, the forces exerted on the granules for access thereof are axial to the worm itself. Basically, the hopper and the thread of the worm act by exerting shear forces and pressing the granule in the direction of its axis, resulting in high torques. Pressure from the weight of the granules located in the reservoir and the hopper of the extruder is also necessary to achieve a good input of material and less load losses in the barrel and subsequent variations in the flow of the resulting extruded material.

The loss of flow in extruders of this type is also caused by factors such as grain size distribution (variable size), as well as the effectiveness of the system in the input of the material to the worm where it is pressed and heated against the internal walls of the heated barrel. These losses can be compensated for with long worm lengths and better mixture homogenization.

The use of granules allows the incorporation of additives such as colorants in the mixture, although it should be mentioned that by reducing the size of the extrusion system, it is difficult to obtain homogeneous mixtures (additive/base material) due to the ratio of the proportions of the granule/extruder system.

On the contrary, with filament extruders, the characteristics of the material (color, etc.) are determined by the latter. Since the plastic filament is wound, it can be easily supplied to the extrusion head continuously by pulling on it while the coil remains fixed in rotation. Additionally, the weight of the components in these extruders is smaller, so they are more lightweight than worm extruders, resulting in faster displacement movements.

The solution for obtaining derived materials is to make homogeneous premixes previously prepared in suitable proportions.

The present invention relates to a small-sized and high efficiency plastic granule extruder system, a granule raw material feed device, and an additive dispensing device for use in 3D printers that offers a solution to the mentioned drawbacks of this extrusion technology and increases their performance.

The applicant is unaware of any equipment similar to the invention.

### BRIEF DESCRIPTION OF THE INVENTION

The invention consists of an extruder and granule feed and liquid additive dispenser system for 3D printers, according to the claims. Its different variants solve the mentioned problems.

A conventional worm extruder requires a certain pressure from the weight of the granules in the feed chamber or hopper in order to achieve a good input of material, and exerts mainly shear axial forces on the mouth of the hopper in order to introduce the granules into its cavity. Other methods to guarantee the abundant input of material is the use of secondary feeding worms.

The extruder object of the patent incorporates a drag shovel at the end of the worm with a larger diameter as an extension to its thread and with a sloping lower face, whereas the throat of the barrel defines a funnel-shaped hopper and curved indentations tangent to the mouth thereof which collaborate with said shovel and exert new forces that facilitate the smooth input of the granules from the hopper into the cavity of the worm, preventing shear forces. Any granule found below the sloping lower face is pressed against the indentations of the hopper and directed into the cavity. In other words, the thrust face of the shovel is configured to exert downward and centrifugal or radial pressure force on the granule in the hopper at all times.

The extruder object of the patent allows using granule storage reservoirs of reduced dimensions in its mobile hopper since the homogeneous flow of the granules does not depend on the weight of the mass of granules on the worn, resulting in less mass to be displaced and greater displacement speeds.

The extruder object of the patent offers constant extrusion flows with short worm lengths and low torques used basically for compacting the granules in intermediate areas of the barrel and not in the access area, as a result of the hopper/shovel system that achieves a constant input of granules into the cavity.

By means of the granule feeding device object of the invention, the hopper of the extruder is kept full of material as a result of a level sensor and a program for filling by means of a pressurized hose. A power regulator for the air pump motor that pressurizes the hose in order to obtain greater air pressure and granule transport distance is preferably provided.

Additionally, the additive dispensing device object of the invention allows the desired dispensing of liquid additive by volume of base material, injecting directly into the barrel or throat of the extruder and obtaining homogeneous mixtures (additive/base material) of extruded material, where multiple hose connections can also be provided before the input thereof for making premixes, such as for obtaining a secondary color from primary colors.

For these reasons, the extruder, feed, and additive dispenser system object of the invention is versatile, powerful, reliable, and lightweight, ideal for being assembled on the heads of desktop or large-format 3D printers.

The extruder can be for plastic granules or granules of another type, such as cement which is hydrated with water as liquid additive.

Other variants can be seen in the rest of the specification.

### DESCRIPTION OF THE DRAWINGS

The following figures are included in order to better understand the invention.
Figure 1: General perspective view of the head of the extruder and the granule feeding and liquid additive dispensing system for 3D printers.
Figure 2. Section of the extrusion head, according to a preferred example.
Figure 3: Section of the dispensing device of the granule feed.
Figures 4A-D: Different section views of the mobile hopper, the barrel, and the worm, and of the collaboration between the elements according to the preferred example.
Figures 5A-D: Stages of transit of the granule from the hopper to the inside of the extruder barrel according to the preferred embodiment.

### EMBODIMENTS OF THE INVENTION

An embodiment of the invention is briefly described below as an illustrative and non-limiting example of the invention.

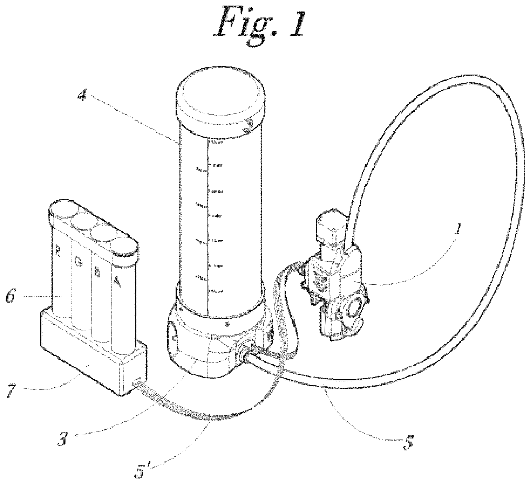

The embodiment (shown in Figure 1) is an extrusion head (1) for extruding plastic granules (2) for 3D printers which is connected to a feeding device (3) and a storage reservoir (4) by means of a hose (5) or semi-rigid conduit, and to other reservoirs (6) and liquid additive dispensing devices (7) with other auxiliary hoses (5'). The extrusion head is assembled in a carriage of a Cartesian or polar displacement system either on guides or suspended from a 3D printing machine by cables.

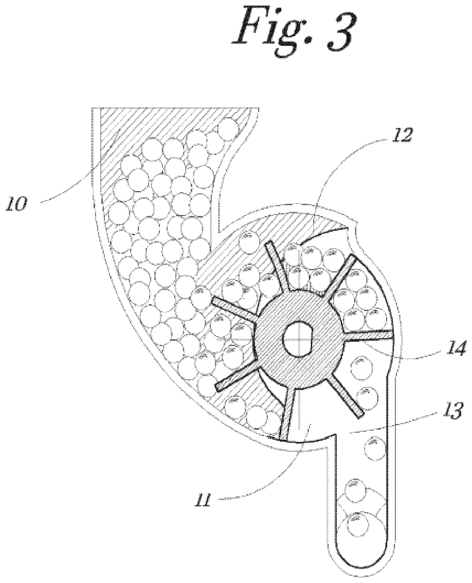

The feeding device has one or more level sensors (8) located in a receptacle (9) or reservoir in the extruder head (1) which indicate the start of the filling program. It dispenses and transports the required amount of material from the storage reservoir to the extrusion head (1) via a feeding hose (5) by means of pressurized air. This is achieved via a dispensing unit (shown in Figure 3) that consists of a hopper (10) for receiving material in the lower part of the storage reservoir, which comprises therein a drum (11) with inlet grooves (12) and outlet grooves (13), and a wheel (14) with shovels located inside the drum and with a width similar thereto. The rotation of the mentioned wheel (14) introduces the material in a controlled manner into the pressurized conduit, preventing blockages. The use of a soft material, such as rubber, in the shovels of the wheel prevents impingement with the granule and reduces pressure loss of the system.

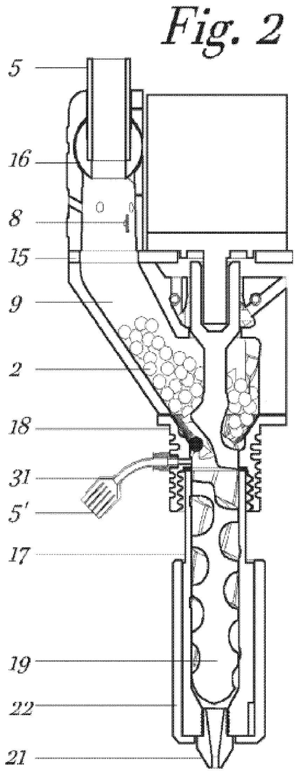

The extrusion head (shown in Figure 2) consists of a mounting plate (15) and a rigid or flexible ball joint (16) for connecting the hose (5) allowing it to rotate and tilt. The extruder consists of a substantially vertical extruder barrel (17) and a throat (18) which, at the upper area whereof, comprises a mobile funnel-shaped hopper (10') for the receiving of the granules, and a rotating internal worm (19), with a drag shovel (20) complementary to the mobile hopper (10') that introduces the granules into the cavity of the worm (19) where they are subsequently heated and compacted in the barrel (17), and extruded through the nozzle (21) in the lower part.

The barrel (17) is heated by an electrical resistor or other means and comprises one or more temperature sensors. It is generally protected by an outer ceramic cover (22) or another type of cover in order to reduce heat losses and prevent burns to the skin from direct contact.

The mobile hopper (10) of the extruder is cooled by air flows or by a water cooling system so that the heat coming from the barrel (17) does not partially melt the granules. The cooling is assisted by radiator fins (23) when fluid flow passes between them.

The attachment between the throat (18) and the rest of the barrel (17) can be a threaded attachment, preferably with a discontinuous or interrupted thread and a thermal washer (24) to reduce heat transfer.

The air pressure of the blower can be regulated by means of a potentiometer for the use of different lengths of feeding hose (5) depending on the dimensions of the printer where it is installed.

The worm can be seen in Figures 2, 3, and 4. As is common in the art, it has a helical notch forming its cavity (25) and threads (26). However, it has, in correspondence with the mobile hopper (10'), a drag shovel (20) thrusting the granules from outside the worm. Said shovel (20) is an extension of the thread and has a shape similar or complementary to the mobile funnel-shaped hopper (10'), as well as a sloping lower thrust face (27) that links with the worm cavity and presses the granules against the indentations (28) of the hopper (10'), producing the drawing effect. This solution causes the granules to enter the worm in a manner independent of the pressure from the weight of material on the hopper (9'), and ensures that no residues adhered to the thread.

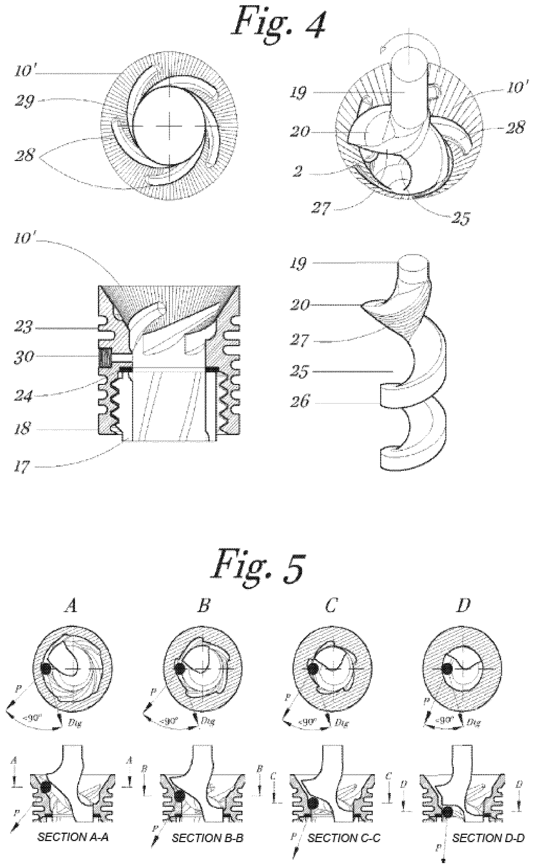

Figure 5 shows, by means of multiple sections of the extruder, the transit of the granule from the mobile hopper (10) to the inside of the barrel (17) as it is captured by the thrust face of the shovel (20). The angle of incidence of the thrust face of the shovel (20) on the granules directly influences the efficiency of the system. The definition of this face exerts a downward force (P) on the granule at all times, describing acute angles with respect to the displacement vector (Dtg) tangent to the indentations.

In this way, the granular material enters the extruder barrel smoothly, abundantly, and continuously, resulting in a homogeneous, fluctuation-free extrusion. As a result of this smooth tangential displacement of the granule towards the mouth (29) of the mobile hopper (10'), the required rotational torque is less.

The throat (18) additionally has one or more side inlets (30) for connecting auxiliary hoses (5') or tubing for dispensing liquid additives. These side inlets (30) are arranged below the mobile hopper (10'). Preferably, a single side inlet is provided with a multiple front connection (31) for the premixes of various additives. The incorporation of the liquid additive directly into the barrel offers rapid material change and better base material/additive mixture homogenization.

## Claims

1. An extruder and granule feed and liquid additive dispenser system for 3D printers, comprising a mobile print head (1) with a substantially vertical extruder barrel (17) and a throat (18) which, at the upper area whereof, comprises a mobile funnel-shaped hopper (10') for the receiving of the granules (2), and a rotating internal worm (19), **characterized in that** said mobile hopper (10') presents curved indentations (28) that progress inward in the rotational direction of the worm, seeking tangency to the mouth (29), and that said worm (19) comprises, as an extension to its thread (26), a drag shovel (20) complementary to the mobile hopper (10') with a sloping internal thrust face (27) that links with its cavity (25) and draws inward the granules contained in the hopper (10') via said indentations.

2. The extruder and granule feed and liquid additive dispenser system according to claim 1, **characterized in that** the thrust face (27) of the shovel (20) is configured to exert a downward and radial pressure force (P) on the granules in the hopper at all times.

3. The extruder and granule feed and liquid additive dispenser system according to claim 1, **characterized in that** the depth of the indentations (28) of the mobile hopper (10') increases progressively in the rotational direction of the worm.

4. The extruder and granule feed and liquid additive dispenser system according to claim 1, **characterized in that** the throat (18) and/or the extruder barrel (17) have one or more side inlets (30) below the mouth of the hopper (10') for the connection of auxiliary hoses (5') for dispensing liquid additive into the barrel.

5. The extruder and granule feed and liquid additive dispenser system according to claim 1, **characterized in that** the feeding device consists of a hopper (10) for receiving granules and a drum (11) in its inner lower part with inlet grooves (12) and outlet grooves (13), and a transport wheel (14) complementary to the hopper (10) and the drum (11) with shovels that are introduced in the hopper (10) through the inlet opening (12) configured for loading the material by means of the rotation thereof and unloading it through the outlet groove (13) to a pressurized feeding hose (5) connected to the mobile hopper (10').

6. The extruder and granule feed and liquid additive dispenser system according to claim 5, **characterized in that** the inlet groove (12) of the drum is located on a convex face of the hopper (10).

7. The extruder and granule feed and liquid additive dispenser system according to claim 5, **characterized in that** the wheel (14) with shovels is made of a soft material.

8. The extruder and granule feed and liquid additive dispenser system according to claim 1, **characterized in that** the hose (5) is attached to the print head (1) in a coupling with a ball joint (16).

9. The extruder and granule feed and liquid additive dispenser system according to claim 1, **characterized in that** the throat (18) and the mobile hopper (10') have cooling elements.

10. The extruder and granule feed and liquid additive dispenser system according to claim 9, **characterized in that** the throat (18) presents radiator fins (23).

11. The extruder and granule feed and liquid additive dispenser system according to claim 1, **characterized in that** the barrel (17) and the throat (18) are two parts attached by means of an interrupted thread and a thermal washer (24).

12. The extruder and granule feed and liquid additive dispenser system according to claim 4, **characterized by** having multiple connections (31) for auxiliary hoses (5') before the side inlets (30).

13. The extruder and granule feed and liquid additive dispenser system according to claim 4, **characterized in that** it comprises peristaltic-type liquid additive pumps.

14. The extruder and granule feed and liquid additive dispenser system according to claim 5, **characterized in that** it comprises an air pump with a power regulator.
